# EUROPÄISCHE PATENTSCHRIFT

(11) **EP 0 798 717 B1**
(45) Veröffentlichungstag und Bekanntmachung des Hinweises auf die Patenterteilung: **26.06.2002**
(21) Anmeldenummer: 97103576.1
(22) Anmeldetag: 05.03.1997
(51) Int. Cl.: G11B 25/06

(54) **Vorrichtung zum Laden und Entladen eines Rekorders zur wahlweisen Aufnahme verschiedener Kassettentypen**
Means for loading and unloading of a tape recorder with cassettes of different size
Dispositif de chargement de cassettes á bande magnétique de differentes dimensions dans le même enregistreur à cassettes

(30) Priorität: 14.03.1996 DE 19610006
(43) Veröffentlichungstag der Anmeldung: 01.10.1997
(73) Patentinhaber: DEUTSCHE THOMSON-BRANDT GMBH, 78048 Villingen-Schwenningen (DE)
(72) Erfinder: Weisser, Fritz, 78112 St. Georgen (DE); Dannegger, Bernadette, 78166 Donaueschingen (DE)
(74) Vertreter: Rossmanith, Manfred, Dr.

(56) Entgegenhaltungen:
- EP-A- 0 374 899
- DE-A- 4 415 729
- US-A- 4 729 046
- US-A- 5 184 261

## Beschreibung

Die Erfindung betrifft eine Vorrichtung zum Laden und Entladen eines Rekorders zur wahlweisen Aufnahme verschiedener Kassettentypen, wobei der Abstand der die Bandspulen aufnehmenden Wickelteller des Rekorders veränderbar ist.

Für digitale Videorekorder ist die Verwendung verschiedener Arten und damit Größen von Kassetten geplant, wie dies bereits in dem Bereich der VHS-Videorekorder üblich ist. In diesen werden verschiedene Kassettentypen, wie beispielsweise Standardkassetten und C-Kassetten, eingesetzt, wobei die C-Kassetten üblicherweise in Camcordern verwendet werden. Wegen des geringen Platzangebotes in Camcordern sind die C-Kassetten wesentlich kleiner als die Standard-VHS-Kassetten. Beim Einsatz von C-Kassetten in VHS-Rekordern geringerer Qualität werden zum Abspielen der C-Kassetten sogenannte Adapterkassetten verwendet, die die C-Kassetten aufnehmen. Bei aufwendigeren VHS-Videorekordern wird eine Vorrichtung zum Laden und Entladen bereitgestellt, die in der Lage ist, ohne die Verwendung von Adapterkassetten verschiedene Kassettentypen zu verarbeiten. Allerdings ist diese Vorrichtung aufgrund der Kassettenidentifikation und der Steuerung des Wickelmechanismusses, dessen Wickelteller in Abhängigkeit von der verwendeten Kassette auf den entsprechenden Abstand einjustiert werden müssen, teuer und relativ kompliziert.

Aus der DE 44 15 729 ist ein Kassettenrekorder zur wahlweisen Aufnahme von Kassetten verschiedener Größe bekannt, bei dem der Abstand der die Bandspulen aufnehmenden Wickelteller veränderbar ist. Ein derartiger Kassettenrekorder weist eine Schieberplatte auf, die in Abhängigkeit von der eingelegten Kassette den Wickeltellerabstand einstellt, wobei ein Erkennungskontakt zum Erkennen der Kassette vorgesehen ist, der die Schieberplatte bewegt. Dabei ist die Schieberplatte mit einer Kassettenladevorrichtung beispielsweise mechanisch verbindbar, so daß die Schieberplatte automatisch betätigt werden kann, wenn eine Kassette, beispielsweise des kleinen Kassettentyps (C-Typ), in die Kassettenladevorrichtung eingelegt und mit dem Ladevorgang begonnen wird. Allerdings ist die Möglichkeit einer mechanischen Verbindung in der Beschreibung der bekannten Vorrichtung nur erwähnt und nicht explizit ausgeführt. Weiterhin benötigt die bekannte Vorrichtung eine Kassettenerkennungsmarkierung auf der Rückseite der entsprechenden Kassette, in die der Erkennungskontakt eingreifen kann.

Der Erfindung liegt daher die Aufgabe zugrunde, eine Vorrichtung zum Laden/Entladen eines Rekorders zu schaffen, mit der auf einfache Weise verschiedene Kassettentypen erkannt und entsprechend die Wickelvorrichtung eingestellt werden kann.

Die Erfindung wird durch die Merkmale des Anspruchs 1 gelöst. Vorteilhafte Ausgestaltungen der Erfindung sind Gegenstand der Unteransprüche.

Vorteilhafterweise weist die erfindungsgemäße Lösung aufgrund der mechanischen Einfachheit ein hohes Kosteneinsparpotential und eine hohe Verläßlichkeit auf. Die Anwendung ist nicht auf Videorekorder oder digitale Videorekorder beschränkt, sondern ist auf jedes Bandlaufwerk anwendbar, das für Bandkassetten verschiedener Größe ausgelegt ist.

Die vorliegende Erfindung betrifft eine Vorrichtung zum Laden und Entladen eines Rekorders zur wahlweisen Aufnahme verschiedener Kassettentypen, wobei der Rekorder mit einer Wickelverstellung des Laufwerks versehen ist, die die Bandwickelteller entsprechend der eingesetzten Kassette einstellt, und die Vorrichtung weiterhin ein mechanisches Mittel aufweist, welches den Typ der Kassette beim Einlegen erkennt und entsprechend die Wickelverstellung des Laufwerks bewirkt.

Vorzugsweise kommen in der erfindungsgemäßen Vorrichtung zwei Kassettentypen zum Einsatz, also derzeit die Standard-VHS-Kassette und die C-Kassette, die in Camcordern eingesetzt wird.

Vorzugsweise wird das mechanische Mittel der erfindungsgemäßen Vorrichtung durch einen U-förmigen Hebel gebildet, wobei der U-förmige Hebel im Boden eines Kassettenaufnahmeschachts angeordnet ist und durch das Einlegen einer Kassette des ersten Typs in einer Stellung parallel zur Bodenebene verbleibt und durch das Einlegen einer Kassette des zweiten Typs aus der Bodenebene herausschwenkt. Vorzugsweise ist der Kassettenaufnahmeschacht in der Form einer Ladeschublade ausgebildet, so daß sich der U-förmige Hebel im Boden der Schublade befindet. Vorzugsweise ist der U-förmige Hebel mit zwei Zapfen im Boden der Ladeschublade befestigt, wobei der Basisschenkel des U-förmigen Hebels in Einschubrichtung der Kassette angeordnet ist. Die Zapfen des U-förmigen Hebels sind vorzugsweise an den Außenseiten der Seitenschenkel des U-förmigen Hebels angeordnet.

Vorzugsweise weist die Wickelverstellung zum Verstellen der Wickelteller eine Schieberplatte auf, die durch das mechanische Mittel gesteuert wird. Hinsichtlich der Realisierung des mechanischen Mittels als U-förmiger Hebel steht dieser beim Ladevorgang des ersten Kassettentyps nicht in Eingriff mit der Schieberplatte, während er-beim Laden des zweiten Kassettentyps in Eingriff mit der Schieberplatte kommt. Dabei verschiebt der U-förmige Hebel beim Ladevorgang des zweiten Kassettentyps die Schieberplatte in Einschubrichtung.

Weiterhin weist die Schieberplatte eine Schieberplattenmitnahme auf, die zum Vorschieben der Schieberplatte von dem U-förmigen Hebel und zum Rückschieben von einem Mitnahmeanschlag betätigt wird, der an dem Kassetteneinschubfach angeordnet ist.

Der Mitnahmeanschlag zum Rücktransport der Schieberplatte ist vorzugsweise ebenfalls auf der Rückseite der Ladeschublade angeordnet. Vorzugsweise umfaßt die Schublade einen Bewegungsmechanismus, der zum Ein- und Ausfahren der Schublade dient, so daß eine automatische Bewegung der Schublade erreicht wird.

Eine vorteilhafte Ausgestaltung der Erfindung ist nachfolgend anhand der Figuren beschrieben, in denen:
Fig. 1 im oberen Teil eine Ladeschublade mit einer Standardkassette in Draufsicht und im unteren Teil eine Ladeschublade mit einer Standardkassette in Seitenansicht zeigt, und
Fig. 2 im oberen Teil die Ladeschublade der Fig. 1 mit einer kleinen Kassette (C-Kassette) in Draufsicht und im unteren Teil die Schublade in Seitenansicht mit einer kleinen Kassette zeigt,
Fig. 3A - 3C die Seitenansicht einer Ladeschublade in verschiedenen Ladezuständen mit verschiedenen Kassetten zeigen, und
Fig. 4A und 4B ein Laufwerk in Draufsicht zeigen.

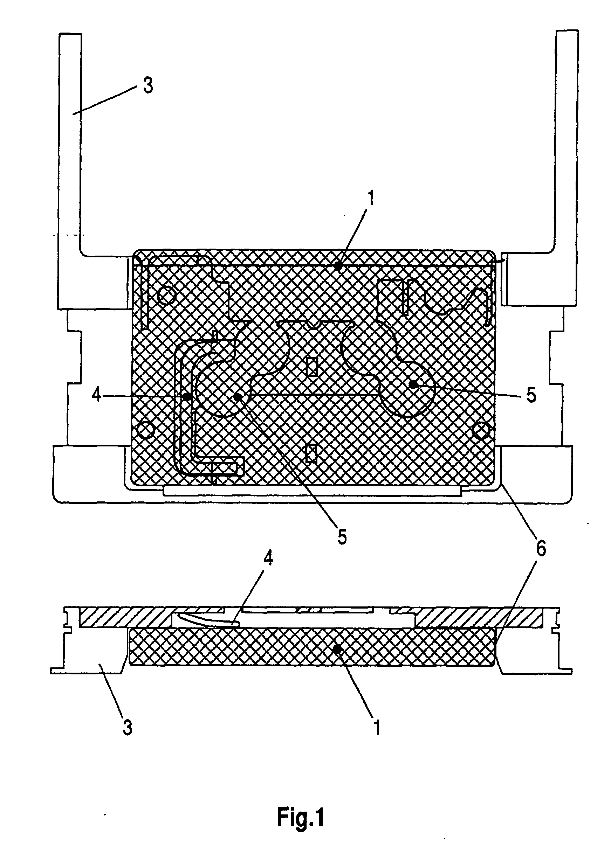

Fig. 1 zeigt eine Standard-VHS-Kassette 1, die in eine Ladeschublade 3 eines Videorekorders eingelegt ist. Die Ladeschublade 3 weist eine Aussparung 6 auf, die der äußeren Abmessung einer VHS-Standardkassette entspricht. Im Boden der Ladekassette 3 ist ein U-förmiger mechanischer Hebel 4 angeordnet. Weiterhin sind Aussparungen 5 im Boden der Ladeschublade 3 vorgesehen, in die die entsprechenden Bandwickelteller entsprechend der Kassette eingreifen können. Dem unteren Teil der Fig. 1 ist zu entnehmen, daß der U-förmige Hebel 4 im Falle der VHS-Standardkassette in der Bodenebene der Ladeschublade bündig angeordnet ist und am Boden der Kassette 1 anliegt.

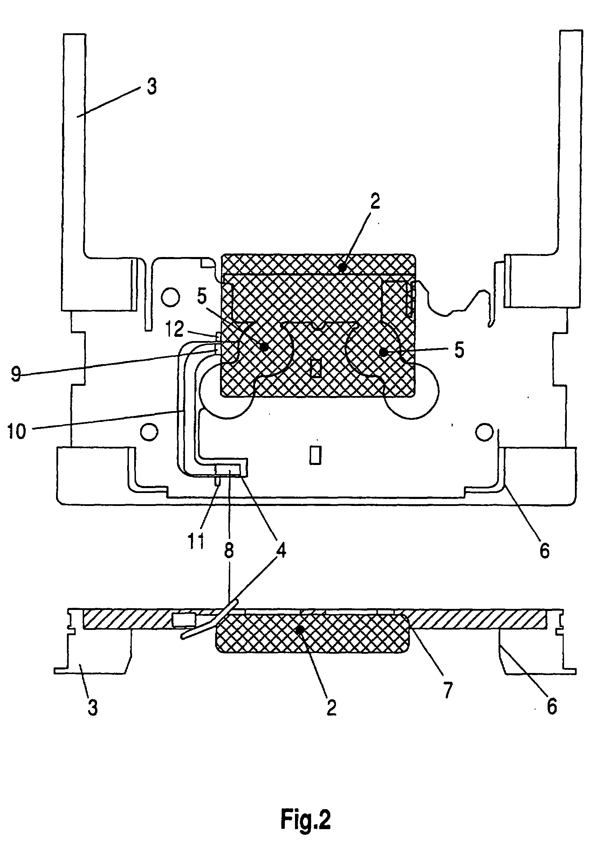

Fig. 2 zeigt eine der Fig. 1 entsprechende Situation mit dem Unterschied, daß eine kleinere Kassette, nämlich eine C-Kassette 2, in die Ladeschublade 3 eingeführt ist. Wie aus dem unteren Teil der Fig. 2 zu entnehmen ist, sind entsprechend der C-Kassette 2 im Boden der Ladeschublade 3 eine entsprechende Aussparung 7 vorgesehen, so daß die C-Kassette 2 aufgenommen werden kann. Entsprechend der Anordnung des U-förmigen Hebels 4 schwenkt dieser aus der Bodenebene der Ladeschublade 3 heraus, so daß ein Teil des Seitenschenkels 8 aus der Bodenebene gegenüber der C-Kassette herausragt. Der Fig. 2 ist weiterhin zu entnehmen, daß der U-förmige Hebel mit zwei Zapfen 11, 12, die an den Außenseiten der Seitenschenkel 8, 9 des U-förmigen Hebels 4 angeordnet sind, in dem Boden der Ladeschublade 3 drehbar befestigt und gelagert sind. Zum Herausdrehen des U-förmigen Hebels 4 aus der Bodenebene der Ladeschublade 3 kann beispielsweise eine nicht dargestellte Feder verwendet werden. Der Basisschenkel 10 des U-förmigen Hebels 4 ist in dieser Ausführungsform in Einschubrichtung angeordnet, d.h. verläuft parallel zur Einschubrichtung der Kassette.

Den Figuren 1 und 2 ist daher zu entnehmen, daß der U-förmige Hebel 4 durch eine Standardkassette 2 daran gehindert wird, aus der Bodenebene herauszuschwenken, während er bei der Verwendung einer kleinen Kassette 2 (C-Kassette) aus dieser Ebene herausschwenkt und somit aus der Rückseite der Ladeschublade 3 herausragt.

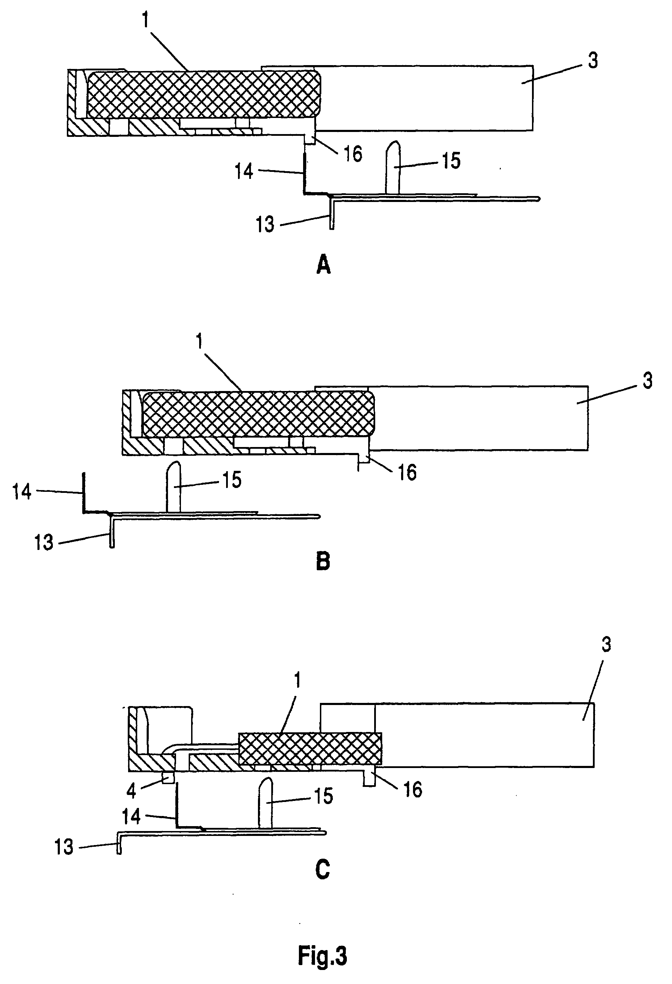

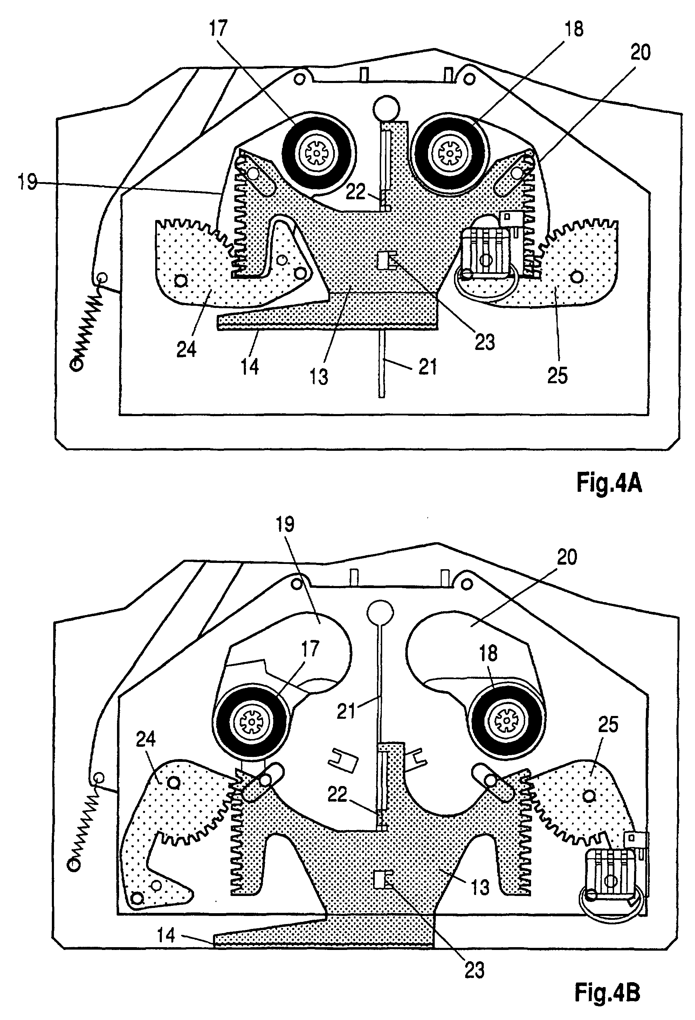

In der Fig. 3A ist eine Standardkassette 1 in der Ladeschublade 3 dargestellt. Zur Verstellung der Wickelspulen ist im Rekorder unterhalb der Ladeschublade, d.h. im Kassettenaufnahmeschacht, eine Schieberplatte 13 angeordnet, die Bestandteil des Laufwerks ist. Diese Schieberplatte 13 beeinflußt die Anordnung der Wickelteller (nicht dargestellt), die in die Aussparungen 5 der Ladeschublade 3 hineinragen. Mit anderen Worten, in einer Stellung der Schieberplatte 13 entspricht der Abstand der beiden Wickelteller einer Standard-VHS-Kassette und in der anderen Stellung einer C-Kassette. Die Schieberplatte 13 weist eine senkrecht-zu ihr angeordnete Schieberplattenmitnahme 14 auf. Die Verbindung der Schieberplatte 13 und der Schieberplattenmitnahme wird in den Figuren 4A, 4B erläutert. Die Schieberplattenmitnahme 14 ragt bis kurz unterhalb der Ladeschublade 3 im ausgefahrenen Zustand der Schublade 3. Weiterhin ist am Boden der Ladeschublade 3 ein Mitnahmeanschlag 16 vorgesehen. Beim Ausfahren (Entladen) kommt der Mitnahmeanschlag 16 in Eingriff mit der Schieberplattenmitnahme 14, so daß die Schieberplatte 13 wieder mechanisch rückgesetzt wird und die Wickelteller in den Zustand "Standard-VHS-Kassette" zurückversetzt werden. Diese Kopplung zwischen Mitnahmeanschlag 16 und Schieberplattenmitnahme 14 ist in Fig. 3A dargestellt, die Ladeschublade 3 im ausgefahrenen Zustand zeigt. Durch das Nichtausschwenken des U-förmigen Hebels 4 aus dem Boden der Ladeschublade 3 bleibt die Schieberplatte 13 der Wickelverstellung in ihrer Ursprungsstellung, da wegen Fehlens einer mechanischen Kopplung zwischen dem U-förmigen Hebel 4 und der Schieberplattenmitnahme 14 seitens der Ladeschublade 90 keine Kraft in die Einschubrichtung ausgeübt wird.

Fig. 3B zeigt die Situation der Ladeschublade vor ihrem Einrasten auf den Wickelantrieb. Dargestellt ist dort der Zeitpunkt kurz bevor die Kassette auf einen Bolzen 15 einrastet, der für die Wickelspulenentriegelung zuständig und auf der Schieberplatte 13 angeordnet ist.

Die Fig. 3C schließlich zeigt die Situation für eine C-Kassette. Hier ist der U-förmige Hebel 4 gekippt und ragt auf der Bodenseite der Schublade 3 heraus. Dadurch wird mit dem Einfahren der Schublade 3 die Schieberplattenmitnahme 14 von dem Hebel 4 ergriffen und in Einschubrichtung bewegt, so daß die Schieberplatte 13 nach vorne geschoben wird. Dadurch wird ein Mechanismus betätigt, der die beiden nicht dargestellten Wickelteller verschiebt, so daß sie auf die Spulen der C-Kassette justiert sind (siehe Fig. 4A, 4B).

Fig. 4A zeigt das Laufwerk eines Rekorders in Draufsicht in der Stellung für die C-Kassette. Der Abstand der beiden Wickelteller 17, 18 entspricht der C-Kassette. Die Verschiebung der Wickelteller 17, 18 erfolgt in entsprechenden Aussparungen 19, 20 über die Schieberplatte 13. Dabei wirkt die Schieberplatte 13 mit zwei, jeweils mit einer Zahnung versehenen Schwenkhebeln 24, 25 zusammen. Weiterhin ist die an der Schieberplatte 13 angebrachte Schiebermitnahme 14 dargestellt. Die -Schieberplatte 13 läuft in einer in Einschubrichtung angeordneten Nut 21 mittels zweier Führungen 22, 23.

Fig. 4B zeigt das Laufwerk in der Stellung für die Standard-VHS-Kassette, wobei die Schieberplatte 13 mit der Schiebermitnahme 14 in Einschubrichtung gesehen zurückgefahren ist (d.h. hinsichtlich der Draufsicht in eine untere Stellung). Der Abstand der Wickelteller 17, 18 in den Aussparungen 19, 20 entspricht der Standard-VHS-Kassette.

## Patentansprüche

1. Vorrichtung zum Laden und Entladen eines Rekorders zur wahlweisen Aufnahme von zwei unterschiedlichen, je einen bandförmigen Aufzeichnungsträger aufweisenden Kassettentypen mit selbsttätiger Kassettentyp-Erkennung und Laufwerk-Wickeltellereinstellung entsprechend dem erkannten Kassettentyp, **dadurch gekennzeichnet, daß** die *Vorrichtung* eine Ladeschublade (3) und einen in der Ladeschublade (3) schwenkbar angeordneten U-förmigen Hebel (4) aufweist, mit dem der jeweilige Kassettentyp erkannt und die Wickelteller (17, 18) des Laufwerks entsprechend dem jeweiligen Kassettentyp eingestellt werden, indem der U-förmige Hebel (4) eine aus der Ladeschublade (3) herausgeschwenkte für eine Kassette (2) eines zweiten Typs vorgesehene Stellung einnimmt, die mit der Ladebewegung dieses Kassettentyps eine Verstellung der Wickelteller (17, 18) und mit der Entladebewegung dieses Kassettentyps eine Rückstellung der Wickelteller (17, 18) in eine für eine Kassette (1) eines ersten Typs vorgesehene Standardstellung bewirkt, und indem der U-förmige Hebel (4) beim Einlegen einer Kassette (1) des ersten Typs in die Ladeschublade (3) durch Betätigen des U-förmigen Hebels (4) durch diesen Kassettentyp in eine Stellung geschwenkt wird, die während der Ladebewegung dieses Kassettentyps die Wickelteller (17, 18) in der Standardstellung läßt.

2. Vorrichtung nach Anspruch 1, **dadurch gekennzeichnet, daß** der U-förmige Hebel (4) im Boden einer Ladeschublade (3) angeordnet ist und durch das Einlegen einer Kassette (1) des ersten Typs in einer Stellung parallel zur Bodenebene der Schublade (5) verbleibt und durch das Einlegen einer Kassette (2) des zweiten Typs aus der Bodenebene der Schublade (3) herausschwenkt.

3. Vorrichtung nach Anspruch 2, **dadurch gekennzeichnet, daß** der U-förmige Hebel (4) mit zwei Zapfen (11, 12) im Boden der Ladeschublade (3) befestigt ist und der U-förmige Hebel (4) mit seinem Basisschenkel (10) in Einschubrichtung angeordnet ist.

4. Vorrichtung nach einem der Ansprüche 2 oder 3, **dadurch gekennzeichnet, daß** die Zapfen (11, 12) an den Außenseiten der Seitenschenkel (8, 9) des U-förmigen Hebels (4) angeordnet sind.

5. Vorrichtung nach einem der vorangegangenen Ansprüche, **dadurch gekennzeichnet, daß** die Wickelverstellung eine Schieberplatte (13) aufweist, die durch das mechanische Mittel (4) gesteuert wird.

6. Vorrichtung nach Anspruch 5, **dadurch gekennzeichnet, daß** der U-förmige Hebel (4) beim Ladevorgang des ersten Kassettentyps nicht in Eingriff mit der Schieberplatte (13) kommt und beim Laden des zweiten Kassettentyps mit der Schieberplatte (13) in Eingriff kommt.

7. Vorrichtung nach Anspruch 6, **dadurch gekennzeichnet, daß** der U-förmige Hebel (4) beim Ladevorgang des zweiten Kassettentyps die Schieberplatte (13) in Einschubrichtung verschiebt.

8. Vorrichtung nach Anspruch 7, **dadurch gekennzeichnet, daß** die Schieberplatte (13) eine Schieberplattenmitnahme (14) aufweist, die zum Vorschieben der Schieberplatte (13) von dem U-förmigen Hebel (4) betätigt und zum Rückschieben von einem Mitnahmeanschlag (16) betätigt wird, der an der Ladeschublade (3) angeordnet ist.

9. Vorrichtung nach einem der Ansprüche 1 bis 8, **dadurch gekennzeichnet, daß** die Schublade (3) einen Bewegungsmechanismus umfaßt, der zum Ein- und Ausfahren der Schublade (3) dient.

## Claims

1. Apparatus for loading and unloading a recorder for selectively receiving two different types of cassette each supporting a tape-like record carrier with automatic identification of the type of cassette and with tape drive-reel adjustment corresponding to the identified type of cassette, **characterized in that** the apparatus includes a loading drawer (3) and an U-shaped lever (4) pivotally mounted within the loading drawer (3) by means of which the respective type of cassette is identified and winding plates (17, 18) of the transport drive are adjusted corresponding to the respective type of cassette wherein the U-shaped lever (4) assumes a position being swiveled out of the loading drawer (3) and being provided for a cassette (2) of a second type of cassette, which position causes with the loading motion of said type of cassette a displacement of the winding plates (17, 18) and with the unloading motion of said type of cassette a reset of the winding plates (17, 18) into a standard position provided for a cassette (1) of a first type and wherein during insertion of a cassette (1) of the first type into loading drawer (3) by actuating the U-shaped lever (4) by this type of cassette the U-shaped lever (4) is swiveled into a position which during the loading motion of this type of cassette lets the winding plates (17, 18) within said standard position.

2. Apparatus according to claim 1, **characterized in that** the U-shaped lever (4) is arranged in the base of a loading drawer (3) and is made to remain in a position parallel to the plane of the base of the drawer (3) by the placing in of a cassette (1) of the first type and is made to swivel out of the plane of the base of the drawer (3) by the placing in of a cassette (2) of the second type.

3. Apparatus according to claim 2, **characterized in that** the U-shaped lever (4) is fastened in the base of the loading drawer (3) by two pins (11, 12) and the U-shaped lever (4) is arranged with its base leg (10) in the pushing-in direction.

4. Apparatus according to one of claims 2 or 3, **characterized in that** the pins (11, 12) are arranged on the outer sides of the side legs (8, 9) of the U-shaped lever (4).

5. Apparatus according to one of the preceding claims, **characterized in that** the winding adjustment has a slide plate (13), which is controlled by the mechanical means (4).

6. Apparatus according to claim 5, **characterized in that** the U-shaped lever (4) does not come into engagement with the slide plate (13) during the loading operation of the first cassette type and comes into engagement with the slide plate (13) during loading of the second cassette type.

7. Apparatus according to claim 6, **characterized in that** the U-shaped lever (4) displaces the slide plate (13) in the pushing-in direction during the loading operation of the second cassette type.

8. Apparatus according to claim 7, **characterized in that** the slide plate (13) has a slide-plate driver (14) which, for pushing forward the slide plate (13), is actuated by the U-shaped lever (4) and, for pushing back, is actuated by a driving stop (16), which is arranged on the loading drawer (3).

9. Apparatus according to one of claims 1 to 8, **characterized in that** the drawer (3) comprises a movement mechanism, which serves for moving the drawer (3) in and out.

## Revendications

1. Dispositif de chargement de cassettes à bande magnétique de deux différentes dimensions dans le même enregistreur à cassettes, présentant chacune un support d'enregistrement à bande, avec identification automatique du type de cassette et réglage automatique du plateau d'enroulement du lecteur en fonction du type de cassette identifié, **caractérisé en ce que** le dispositif présente un tiroir (3) et un levier (4) en forme de U pouvant pivoter, placé dans le tiroir (3), qui permet d'identifier le type de cassette et de régler le lecteur en fonction de ce type, dans lequel le levier (4) en forme de U prend une position prévue pour une cassette (2) d'un second type en sortant du tiroir, position qui, lors du chargement de ce type de cassette, effectue un réglage des plateaux d'enroulement (17, 18) et, lors du déchargement de ce type de cassette, repositionne les plateaux d'enroulement (17, 18) dans une position prévue pour une cassette (1) du premier type, et dans lequel le levier (4) en forme de U pivote dans une position, lors de l'insertion d'une cassette (1) du premier type dans le tiroir (3), par actionnement du levier (4) en forme de U par ce type de cassette, position qui laisse les plateaux d'enroulement (17, 18) dans la position standard pendant le chargement de ce type de cassette.

2. Dispositif conforme à la revendication 1, **caractérisé en ce que** le levier (4) en forme de U est placé au fond d'un tiroir de chargement (3), reste parallèle au fond du tiroir (5) lors de l'insertion d'une cassette (1) du premier type et sort du fond du tiroir (3) lors de l'insertion d'une cassette (2) du second type.

3. Dispositif conforme à la revendication 2, **caractérisé en ce que** le levier (4) en forme de U est fixé par deux tourillons (11, 12) au fond du tiroir de chargement (3) et **en ce qu'**il est placé dans le sens d'insertion avec sa branche de base (10).

4. Dispositif conforme à l'une des revendications 2 ou 3, **caractérisé en ce que** les tourillons (11, 12) sont placés sur les côtés extérieurs des branches latérales (8, 9) du levier (4) en forme de U.

5. Dispositif conforme à l'une des revendications précédentes, **caractérisé en ce que** le réglage d'enroulement présente un plateau coulissant (13) commandé par le dispositif mécanique (4).

6. Dispositif conforme à la revendication 5, **caractérisé en ce que** le levier (4) en forme de U n'entre pas en contact avec le plateau coulissant (13) lors du chargement du premier type de cassette et entre en contact avec le plateau coulissant (13) lors du chargement du second type de cassette.

7. Dispositif conforme à la revendication 6, **caractérisé en ce que** le levier (4) en forme de U déplace le plateau coulissant (13) dans le sens d'insertion lors du chargement du second type de cassette.

8. Dispositif conforme à la revendication 7, **caractérisé en ce que** le plateau coulissant (13) présente un entraînement du plateau coulissant (14) qui est actionné par le levier (4) en forme de U pour faire avancer le plateau coulissant (13) et qui est actionné par une butée d'entraînement (16) placée sur le tiroir de chargement (3) pour le faire reculer.

9. Dispositif conforme à l'une des revendications 1 à 8, **caractérisé en ce que** le tiroir (3) comporte un mécanisme de déplacement qui sert à rentrer et sortir celui-ci.
